# EUROPÄISCHE PATENTSCHRIFT

(11) **EP 2 582 480 B1**
(45) Veröffentlichungstag und Bekanntmachung des Hinweises auf die Patenterteilung: **14.01.2015**
(21) Anmeldenummer: 11723184.5
(22) Anmeldetag: 01.06.2011
(51) Int. Cl.: B23D 37/00, B23D 37/14

(54) **VERWENDUNG EINER VORRICHTUNG ZUM SPANENDEN DREHBEARBEITEN**
USE OF A DEVICE FOR MACHINING BY TURNING
UTILISATION D'UN DISPOSITIF DE TOURNAGE

(30) Priorität: 15.06.2010 DE 202010009081 U
(43) Veröffentlichungstag der Anmeldung: 24.04.2013
(73) Patentinhaber: J.G. Weisser Söhne GmbH & Co. KG, 78112 St. Georgen (DE)
(72) Erfinder: KUMMER, Norbert, 78112 St. Georgen (DE); KLAUS, Peter, 78144 Schramberg -Tennenbronn (DE)
(74) Vertreter: Börjes-Pestalozza, Henrich
(86) Internationale Anmeldenummer: PCT/EP2011/002708
(87) Internationale Veröffentlichungsnummer: WO 2011/157360

(56) Entgegenhaltungen:
- DE-A1- 3 525 514
- DE-A1- 10 144 649
- DE-A1- 10 251 922

## Beschreibung

Die Erfindung betrifft eine Verwendung einer Vorrichtung zum spanenden Drehbearbeiten rotationssymmetrischer Flächen eines Werkstücks mit einem rotierenden Antrieb des gespannten Werkstücks, wobei die Rotation des Werkstücks die Schnittgeschwindigkeit der Bearbeitung bewirkt, mit einem Werkzeug mit einer Schneide und mit einem Vorschub des Werkzeugs, dessen Vorschubgeschwindigkeit wesentlich geringer als die Schnittgeschwindigkeit ist und durch welchen die Schneide mit einer entlang der Schneide wandernden Wirkstelle mit dem Werkstück in Eingriff kommt, wobei das Werkzeug mit der Schneide um eine Werkzeugrotationsachse schwenkbar angeordnet ist und wobei die Schneide am Werkzeug so ausgerichtet ist, dass die Schneide eine die Werkzeugrotationsachse enthaltende Axialebene schräg durchstößt.

Durch die schräge Ausrichtung der Schneide in Bezug auf die Axialebene wird erreicht, dass die Schneide mit der Axialebene an ihrem Durchstoßpunkt einen von Null verschiedenen Winkel einschließt und die Axialebene somit transversal schneidet. Durch die schräge Ausrichtung kommen daher die Abschnitte der Schneide längs ihres Verlaufs nicht gleichzeitig, sondern nacheinander am Werkstück in Angriff, so dass der jeweils eine spanende Drehbearbeitung bewirkende Schneidenabschnitt und der am Werkstück momentan bearbeitete Umfang miteinander axial, also parallel zur Rotationsachse des Werkstücks, wandern, ohne dass das Werkzeug oder das Werkstück in dieser Richtung verfahren werden müssen. Dies kann vorteilhaft für ein drallfreies Drehen verwendet werden.

Eine derartige Vorrichtung ist aus DE 10 2004 026 675 C5 bekannt und hat sich bewährt. In manchen Fällen ist es jedoch erforderlich, das Werkstück mit dem Werkzeug zweimal zu beaufschlagen, um zunächst ein Schruppen und anschließend ein Schlichten zu bewirken. Dies führt dazu, dass das Werkzeug, vor allem bei einer häufigeren derartigen doppelten Benutzung eine verminderte Standzeit haben kann.

Aus DE 35 25 514 A1, das den Oberbegriff des Anspruchs 1 offenbart, sind ein Verfahren und eine Vorrichtung zum spanabhebenden Bearbeiten eines sich drehenden Werkstücks bekannt, bei welchen die Schneiden eines Werkzeugs während des Eingriffs bogenförmig bewegt werden, wobei sie je einmal und im Wesentlichen einzeln sowie kurzzeitig im Eingriff sind und die Eingriffsbreite auf mehrere Schneiden verteilt ist. Aus DE 101 44 649 A1 ist ein Verfahren zur drallfreien spanenden Bearbeitung von rotationssymmetrischen Flächen bekannt, bei welchem wenigstens eine bezüglich der Rotationsachse des Werkstücks windschiefe, geradlinige Schneide in einer Vorschubbewegung an rotierenden Werkstück kontaktierend in einer Ebene entlang geführt wird, wobei die Vorschubbewegung eine axiale Bewegung umfasst.

Aus DE 102 51 922 A1 ist eine Proben-Fräsmaschine bekannt, bei welcher ein Fräser eine oder mehrere Fluidaustrittsöffnungen aufweist.

Es besteht deshalb die Aufgabe, eine Vorrichtung der eingangs genannten Art zu schaffen, bei welcher die Standzeit des Werkzeugs und insbesondere der Schneide verlängert ist.

Diese Aufgabe wird gelöst durch die Merkmale von Anspruch 1.

Die überraschende Lösung dieser scheinbar widersprüchlichen Aufgabe besteht somit insbesondere darin, dass das Werkzeug eine zweite Schneide aufweist, die zu der ersten Schneide um einen Drehwinkel um die Werkzeugrotationsachse versetzt angeordnet und ausgerichtet ist und zusammen mit der ersten Schneide auf einer Vorschubbahn bewegbar ist, wobei die in Vorschubrichtung des Werkzeugs vordere Schneide eine Schrupp-Schneide und die zweite Schneide eine Schlicht-Schneide ist.

Die Schneide kann hierbei erfindungsgemäß einen geradlinigen oder einen gekrümmten Verlauf aufweisen, wobei eine Form der Schneide, durch welche zumindest in Eingriffsposition des Werkzeugs eine zur Werkzeugrotationsachse koaxiale Schraubenlinie zumindest näherungsweise oder exakt beschrieben ist, zur Erreichung eines drallfreien Drehens besonders günstig und daher bevorzugt ist.

Insbesondere kann daher eine erfindungsgemäße Lösung darin bestehen, dass bei einer Vorrichtung zum spanenden Drehbearbeiten rotationssymmetrischer Flächen eines Werkstücks mit einem rotierenden Antrieb des gespannten Werkstücks, wobei die Rotation des Werkstücks die Schnittgeschwindigkeit der Bearbeitung bewirkt, mit einem Werkzeug mit einer Schneide und mit einem Vorschub des Werkzeugs, dessen Vorschubgeschwindigkeit wesentlich geringer als die Schnittgeschwindigkeit ist und durch welche die Schneide mit einer entlang der Schneide wandernden Wirkstelle mit dem Werkstück in Eingriff kommt, wobei das Werkzeug um eine Werkzeugrotationsachse bewegbar ist, so dass die Schneide auf einer kreisbogenförmigen Vorschubbahn bewegt wird, und wobei die Schneide die Form einer zur Werkzeugrotationsachse koaxialen Schraubenlinie aufweist, vorgesehen ist, wobei das Werkzeug eine zweite Schneide aufweist, die parallel zu der ersten Schneide angeordnet und zusammen mit dieser auf einer kreisbogenförmigen Vorschubbahn bewegbar ist, und wobei auch die zweite Schneide die Form einer zur gemeinsamen Werkzeugrotationsachse koaxialen Schraubenlinie aufweist, wobei die in Vorschubrichtung des Werkzeuges vordere Schneide eine Schrupp-Schneide und die zweite Schneide eine Schlicht-Schneide ist.

Unter der Schneide eines Werkzeugs wird die vordere Kante des Werkzeugs, welche bei der Drehbearbeitung die Abmessung des bearbeiteten Werkstücks bestimmt, verstanden.

Zwar ist es aus DE 10 2004 026 675 C5 auch bekannt, einen scheibenförmigen Werkzeugträger vorzusehen, an dessen Umfang auch mehrere versetzte Werkzeuge angeordnet sein können. Diese sollen aber wahlweise eingesetzt werden, um unterschiedliche Oberflächen zu erzeugen. Die Kombination einer Schrupp-Schneide mit einer Schlicht-Schneide bevorzugt an einem einzigen Werkzeug geht daraus nicht hervor.

Diese Kombination einer Schrupp-Schneide mit einer Schlicht-Schneide ermöglicht dem Benutzer bei einer Werkstückaufspannung dessen Schruppen und in einer Fortsetzung der Vorschubbewegung des Werkzeugs auch dessen Schlichten, wobei gleichzeitig die Standzeit des Werkzeugs beziehungsweise der Schneiden aufgrund dieser Aufteilung verlängert wird. Vor allem die Schlicht-Schneide kann eine wesentlich höhere Standzeit haben.

Bei einer Ausgestaltung der Erfindung kann vorgesehen sein, dass die Schneiden jeweils geradlinig ausgebildet sind. Von Vorteil ist dabei, dass die Werkzeuge besonders einfach fertigbar sind.

Bei einer Ausgestaltung der Erfindung kann vorgesehen sein, dass die Schneiden die Form einer zur Werkzeugrotationsachse koaxialen Schraubenlinie aufweisen. Von Vorteil ist dabei, dass zusätzliche Ausgleichsbewegungen am Werkzeug oder Werkstück zur Erreichung einer Zylinderform ganz oder nahezu vollständig verzichtbar sind.

Es kann vorgesehen sein, dass die Vorschubbahn kreisbogenförmig ist. Von Vorteil ist dabei, dass die Bewegung mit einer geringen Anzahl von Vorschub- und/oder Zustellantrieben und mit geringem Regelungsaufwand ausführbar ist.

Besonders günstig ist es, wenn die Schneiden entlang ihrer Verlaufsrichtungen zueinander einen gleichbleibenden Abstand einhalten. Von Vorteil ist dabei, dass einfache geometrische Verhältnisse erreicht werden und dass der zeitliche Abstand, mit welchem die einzelnen Abschnitte der Schneiden jeweils nacheinander am Werkstück in Eingriff kommen, bei gleichbleibender Schwenkbewegung des Werkzeugs um die Werkzeugrotationsachse für alle drehbearbeiteten axialen Positionen gleich bleibt.

Es ist erfindungsgemäß vorgesehen, dass der Vorschub des Werkzeugs zur Ausführung einer der Schwenkbewegung des Werkzeugs um die Werkzeugrotationsachse überlagerten Ausgleichsbewegung des Werkzeugs zum drallfreien Drehen eingerichtet ist. Von Vorteil ist dabei, dass auf einfache Weise Abweichungen von der theoretischen, idealen Schraubenlinienform der Schneide, wie sie sich beispielsweise bei einer geradlinigen Schneide notwendig ergeben, ausgleichbar sind. Besonders günstig ist es, wenn der Vorschub des Werkzeugs zur Ausführung einer radial zur Werkzeugrotationsachse ausgerichteten Ausgleichsbewegung eingerichtet ist oder wenn der Vorschub des Werkzeugs zur Ausführung einer radial zu einer Werkstückrotationsachse ausgerichteten Ausgleichsbewegung eingerichtet ist.

Der in Vorschubrichtung vorhandene Abstand der Schlicht-Schneide von der Schrupp-Schneide kann etwa der Vorschubbewegung der Schrupp-Schneide für eine Umfangsbearbeitung des Werkstücks entsprechen, so dass die Schlicht-Schneide bei Fortsetzung des Vorschubs des Werkzeugs nach Beendigung des Schrupp-Vorganges mit dem Werkstück in Eingriff gelangt und in Eingriff ist. Durch geschickte Wahl des Abstandes der beiden Schneiden kann also der Schlicht-Vorgang sich unmittelbar an den Schrupp-Vorgang anschließen, so dass einerseits die Schlicht-Schneide geschont wird, weil sie eine schon bearbeitete Oberfläche vorfindet, ohne dass andererseits ein erheblicher Zeitverlust entsteht.

Besonders günstig ist es dabei, wenn die Schrupp-Schneide und die Schlicht-Schneide an einem gemeinsamen Halter angeordnet sind. Dadurch wird die sich fortsetzende Vorschubbewegung der beiden Schneiden in dem gewünschten Abstand hintereinander auf einfache Weise sichergestellt. Ein weiterer Vorteil ist, dass die Schrupp-Schneide und die Schlicht-Schneide über den Halter in einer gemeinsamen Aufnahme an einem Werkzeugrevolver angeordnet werden können.

Der Halter für die beiden Schneiden kann in deren Befestigungsbereich eine in Vorschubrichtung orientierte Verbreiterung aufweisen, an welcher die wenigstens zwei Schneiden in Vorschubrichtung hintereinander angeordnet sind. Durch die Verbreiterung kann der erwünschte und erforderliche Abstand der beiden Schneiden auf einfache Weise vorgesehen und eingehalten werden.

Günstig ist es, wenn wenigstens eine der Schneiden oder alle Schneiden insbesondere einzeln auswechselbar sind. Je nach Verschleiß kann dann eine Schneide ausgewechselt werden, wobei in der Regel die Schrupp-Schneide zuerst auszuwechseln sein wird.

Die Schraubenlinien der Schneiden können eine Steigung mit einem Steigungswinkel zwischen 0° und 90°, vorzugsweise zwischen 15° und 45° aufweisen und der Steigungswinkel kann in Bezug auf die Vorschubrichtung positiv oder negativ sein. Diese Form der Schraubenlinie hat sich schon bei der Vorrichtung gemäß DE 10 2004 026 675 C5 für die eine Schneide bewährt und kann in gleicher Weise für die erfindungsgemäße Verwendung zweier nacheinander wirksamer Schneiden vorgesehen sein.

Sofern die Schneiden von der Schraubenlinienform abweichen, beispielsweise geradlinig oder beliebig gekrümmt ausgeführt sind, kann entsprechend vorgesehen sein, dass die Schneiden tangential zu Schraubenlinien, welche eine Steigung mit einem Steigungswinkel zwischen 0° und 90°, vorzugsweise zwischen 15° und 45°, aufweisen, ausgerichtet sind, wobei der Steigungswinkel im Bezug auf die Vorschubrichtung positiv oder negativ ist.

Hierbei bedeutet die tangentiale Ausrichtung der Schneide zur (gedachten) Schraubenlinie, dass die durch die Schneide beschriebene eindimensionale Kurve die Schraubenlinie in einem Punkt derart berührt und sich an die Schraubenlinie anschmiegt, dass der Tangentialvektor an die Schneide im Berührungspunkt parallel zu dem Tangentialvektor an die Schraubenlinie verläuft, so dass beide Tangentialvektoren auf derselben Geraden liegen. Ein Spezialfall der tangentialen Ausrichtung stellt die Ausrichtung einer geradlinigen Schneide entlang eines Tangentialvektors an die Schraubenlinie dar, es ist jedoch auch eine tangentiale Ausrichtung einer gekrümmten Schneide zu einer Schraubenlinie möglich. Mit anderen Worten berühren die Schneiden jeweils eine Schraubenlinie mit den angegebenen Merkmalen tangential und schmiegen sich im Berührpunkt an die Schraubenlinie an.

In Anlehnung an DE 10 2004 026 675 C5 kann auch bei der erfindungsgemäßen Verwendung vorgesehen sein, dass die beiden Schneiden die Form einer Schraubenlinie aufweisen oder jeweils zu einer Schraubenlinie tangential ausgerichtet sind, wobei die Schraubenlinien in der Mantelfläche eines geraden Kreiszylinders mit konstantem Durchmesser oder in der Mantelfläche eines Konus verlaufen. Entsprechend geformte Werkstücke können somit geschruppt und geschlichtet werden.

Die Werkzeugrotationsachse und die Werkstückrotationsachse können parallel oder unter einem Winkel von 0° bis 90° zueinander geneigt verlaufen, um beispielsweise zylindrische Außenflächen oder aber flächige Stirnseiten oder Planflächen bearbeiten zu können.

Eine abgewandelte Ausführungsform kann vorsehen, dass der Radius der kreisbogenförmigen Vorschub- oder Schwenkbewegung der Schneiden kleiner als der Radius einer zu bearbeitenden Innenoberfläche des Werkstücks ist, so dass auch solche Innenoberflächen in gleicher Weise spanend geschruppt und geschlichtet werden können.

Zur Vermeidung von zu starker Erwärmung des Werkzeugs kann vorgesehen sein, dass das Werkzeug gekühlt ist. Besonders günstig ist es, wenn das Werkzeug luftgekühlt ist.

Es kann vorgesehen sein, dass das Werkzeug einen innenliegenden Kühlkanal aufweist. Somit ist der Kühlkanal vor äußeren mechanischen Beanspruchungen geschützt angeordnet.

Zur Versorgung beider Schneiden gleichzeitig kann der Kühlkanal ventillos zu den Schneiden verzweigt ausgebildet sein. Diese ventillose Ausführung ist besonders bei Luftkühlung günstig, da in diesem Fall der Kühlmittelaustritt an der momentan nicht schneidenden Schneide die Drehbearbeitung nicht oder nur gering stört.

Vor allem bei Kombination einzelner oder mehrerer der vorbeschriebenen Merkmale und Maßnahmen ergibt sich eine Vorrichtung, mit welcher rotationssymmetrische Flächen spanend bearbeitet werden können, wobei auf einfache Weise eine drallfreie Bearbeitung mit hoher Zerspanungsleistung ermöglicht wird, die dadurch noch gesteigert ist, dass eine Schrupp-Schneide und eine Schlicht-Schneide so kombiniert sind, dass sie nacheinander praktisch ohne Zeitverlust zum Einsatz kommen können, wodurch auch insbesondere die Schlicht-Schneide eine größere Standzeit erreichen kann, als wenn ein Werkstück nur mit einer Schneide bearbeitet würde.

Nachstehend sind Ausführungsbeispiele der Erfindung anhand der Zeichnung näher beschrieben. Es zeigt in zum Teil erheblich schematisierter Darstellung:
- Fig. 1: eine Vorrichtung zum spanenden Drehbearbeiten rotationssymmetrischer Flächen, wobei ein um eine Werkzeugrotationsachse bewegbares Werkzeug eine erste Schneide aufweist, die in Arbeitsstellung ist, während eine zweite Schneide, eine Schlicht-Schneide, in Vorschubrichtung des Werkzeugs dahinter angeordnet ist, wobei ein zylindrisches Werkstück bearbeitet wird,
- Fig. 2: eine der Fig. 1 entsprechende Darstellung, wobei das Werkzeug mit einer Schrupp-Schneide und einer Schlicht-Schneide an der Innenfläche eines rotationssymmetrischen Werkstücks angreift und um die Werkzeugrotationsachse bewegbar ist, während das Werkstück mit hoher Drehzahl rotiert,
- Fig. 3: eine Vorrichtung mit einem Werkzeug mit einer Schrupp-Schneide und einer Schlicht-Schneide, die an einer Planfläche eines rotationssymmetrischen Werkstücks angreifen, sowie
- Fig. 4: eine Seitenansicht eines Werkzeugs mit zwei in Vorschubrichtung des Werkzeugs hintereinander angeordneten Schneiden, nämlich einer Schrupp-Schneide und einer Schlicht-Schneide.

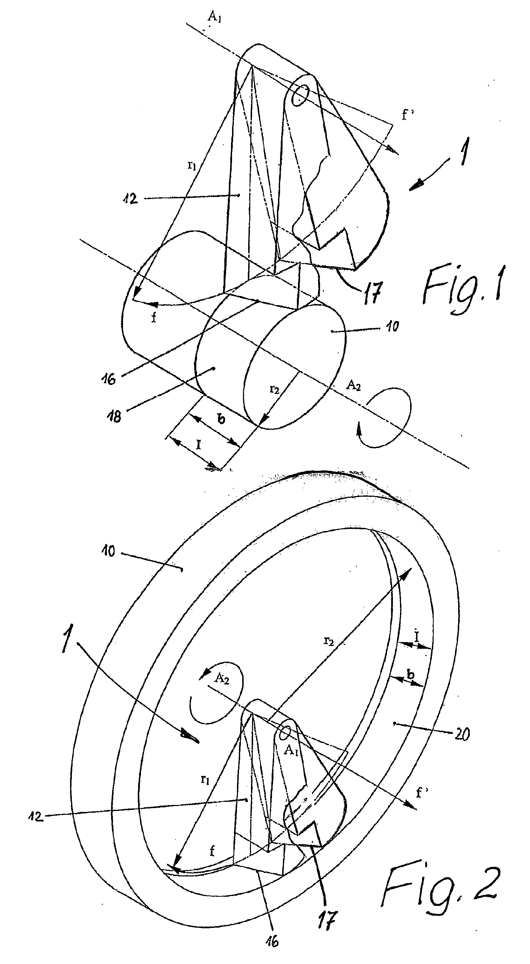

Eine im Ganzen mit 1 bezeichnete Vorrichtung dient zum spanenden Drehbearbeiten rotationssymmetrischer Flächen eines Werkstücks 10, welches gemäß den Fig. 1 bis 3 unterschiedlich gestaltet sein kann.

In allen Ausführungsbeispielen hat das Werkstück 10 einen nicht näher dargestellten rotierenden Antrieb, wobei das Werkstück 10 in bekannter Weise eingespannt ist, damit eine spanende Drehbearbeitung einer rotationssymmetrischen Fläche des jeweiligen Werkstücks 10 durchgeführt werden kann, wobei die Rotation des Werkstücks 10 die Schnittgeschwindigkeit der Bearbeitung bewirkt. Ferner gehört zu der Vorrichtung 1 ein in den Fig. 1 bis 3 schematisiert angedeutetes Werkzeug 12, welches bei der Bearbeitung mit einem Vorschub bewegt wird, dessen Geschwindigkeit wesentlich geringer als die Schnittgeschwindigkeit ist und durch welchen eine Schneide 16 des Werkzeugs 12 mit einer entlang dieser Schneide 16 wandernden Wirkstelle mit dem Werkstück 10 in Eingriff kommt.

Das Werkzeug 12 ist dabei in allen Ausführungsbeispielen um eine Werkzeugrotationsachse A1 bewegbar, so dass die Schneide 16 auf einer kreisbogenförmigen Vorschubbahn f bewegt wird. Die Schneide 16 hat dabei die Form einer zur Werkzeugrotationsachse A1 koaxialen Schraubenlinie. Die Rotation des Werkstücks 10 erfolgt dabei um die Werkstückrotationsachse A2.

Bei weiteren Ausführungsbeispielen weist die Schneide 16 zwar nicht die Form einer exakten koaxialen Schraubenlinie auf, sondern ist lediglich an eine solche angenähert. Beispielsweise kann die Schneide 16 auch geradlinig oder gering gekrümmt ausgeführt sein und die gedachte Schraubenlinie in einem Berührpunkt tangential berühren oder zu der Schraubenlinie tangential ausgerichtet sein oder sich an die Schraubenlinie tangential anschmiegen. In diesem Fall weist der nicht weiter dargestellte Vorschub für das Werkzeug 12 eine zusätzliche Bewegungsachse auf, um Ausgleichsbewegungen entlang der Richtung des Radius r1 zu ermöglichen.

Unterteilt man die Schneide 16 gedanklich in aufeinanderfolgende, zueinander benachbarte Schneideabschnitte, so bewirkt die Form und Ausrichtung der Schneiden, dass die einzelnen Schneidenabschnitte zeitlich nacheinander am Werkstück in den Spanbearbeitungseingriff gelangen. Hierdurch wandert der momentane Drehbearbeitungsumfang in axialer Richtung, ohne dass das Werkzeug oder Werkstück axial verfahren werden müsste.

In allen dargestellten Ausführungsbeispielen erkennt man, dass das Werkzeug 12 zusätzlich zu der schon erwähnten Schneide 16 eine zweite Schneide 17 aufweist, die parallel zu der ersten Schneide 16 angeordnet und zusammen mit dieser auf der kreisbogenförmigen Vorschubbahn f bewegbar ist, wobei auch diese zweite Schneide 17 die Form einer zur gemeinsame Werkzeugrotationsachse A1 koaxialen Schraubenlinie aufweist.

Die in Vorschubrichtung beziehungsweise in Richtung der Vorschubbahn f des Werkzeugs 12 vordere Schneide 16 ist dabei eine Schrupp-Schneide und die zweite Schneide 17 eine Schlicht-Schneide. Demgemäß wird die erste Schneide im Folgenden auch "Schrupp-Schneide 16" und die zweite Schneide "Schlicht-Schneide 17" genannt.

Die Schlicht-Schneide 17 ist also in Vorschubrichtung des Werkzeugs 12 hinter der Schrupp-Schneide 16 angeordnet, folgt dieser also und kann somit unmittelbar nach dem Schruppen in Eingriff gelangen und in einem angeschlossenen Arbeitsgang praktisch ohne Unterbrechung die Werkzeugoberfläche schlichten. Dies erlaubt eine genauere und auch feinere Bearbeitung des Werkstücks 10 an dessen jeweils spanend bearbeiteter Fläche.

Dabei ist in allen Ausführungsbeispielen der Abstand der Schlicht-Schneide 17 von der Schrupp-Schneide 16 so bemessen, dass er der Vorschubbewegung beziehungsweise dem Vorschub der Schrupp-Schneide 16 für eine Umfangsbearbeitung des Werkstücks 10 entspricht, so dass die Schlicht-Schneide 17 bei Fortsetzung des Vorschubs des Werkzeugs 12 nach Beendigung des Schrupp-Vorganges mit diesem Werkstück 10 in Eingriff ist und sich die Schlicht-Bearbeitung unmittelbar an die Schrupp-Bearbeitung anschließen kann.

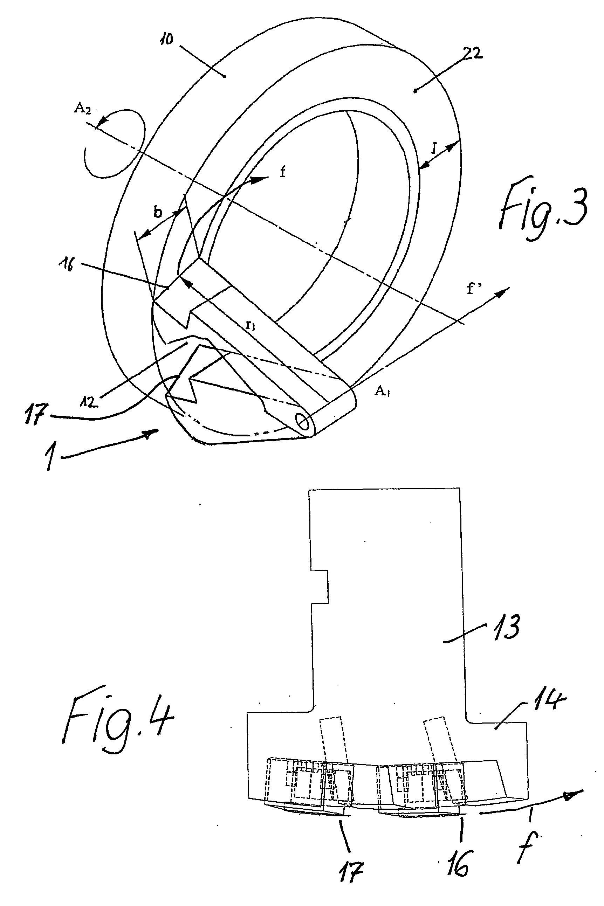

Vor allem in Fig. 4 ist dargestellt, dass die Schrupp-Schneide 16 und die Schlicht-Schneide 17 an einem gemeinsamen Halter 13 angeordnet sind, so dass auch ihr gegenseitiger Abstand unverändert festliegt. Dabei können die Schrupp-Schneide 16 und/oder die Schlicht-Schneide 17 insbesondere einzeln auswechselbar sein, so dass sie je nach Verschleiß ersetzt werden können, wobei dann aber die noch nicht zu stark verschlissene Schneide weiter verwendet werden kann. Da die spanende Drehbearbeitung auf zwei Schneiden aufgeteilt ist, ergeben sich entsprechend längere Standzeiten.

In Fig. 4 erkennt man, dass der Halter 13 für die beiden Schneiden in deren Befestigungsbereich eine in Vorschubrichtung orientierte Verbreiterung 14 aufweist, an welcher die beiden Schneiden in Vorschubrichtung hintereinander angeordnet sind und aufgrund dieser Verbreiterung 14 auch genügend Platz für den zwischen ihnen erforderlichen Abstand haben.

In allen dargestellten Ausführungsbeispielen weisen die beiden Schneiden 16 und 17 jeweils die Form einer Schraubenlinie auf, die in der Mantellinie eines geraden Kreiszylinders mit konstantem Durchmesser verläuft, der dem Doppelten des Radius r1 der kreisbogenförmigen Vorschubbahn f entspricht. Denkbar wäre aber auch, Schneiden zu wählen, die in der Mantelfläche eines Konus verlaufen, wenn eine konisches Werkstück 10 zu bearbeiten ist.

Bei weiteren Ausführungsbeispielen, bei denen die Schneide 16 von der exakten Schraubenlinienform abweicht, sind die Form und Ausrichtung der Schneide 17 auf die Form und Ausrichtung der Schneide 16 abgestimmt.

In den Ausführungsbeispielen gemäß Fig. 1 und 2 verlaufen die Werkzeugrotationsachse A1 und die Werkstückrotationsachse A2 parallel zueinander.

Im Ausführungsbeispiel gemäß Fig. 3 ist die Werkzeugrotationsachse A1 unter einem Winkel von 90° gegenüber der Werkstückrotationsachse A2 geneigt, steht also rechtwinklig zu dieser, um eine Planfläche 22 an einem rotationssymmetrischen Werkstück 10 bearbeiten zu können.

Im Ausführungsbeispiel gemäß Fig. 1 sind die Werkzeugrotationsachse A1 und die Werkstückrotationsachse A2 zueinander beabstandet und verlaufen parallel, so dass die Schneiden 16 und 17 eine Außenfläche 18 des zylinderförmigen Werkstücks 10 bearbeiten.

Im Ausführungsbeispiel gemäß Fig. 2 sind die Schneiden 16 und 17 so angeordnet, dass sie eine zylindrische Innenfläche 20 eines Werkstücks 10 bearbeiten können.

Dabei erkennt man in allen drei Ausführungsbeispielen einerseits die axiale Breite b der Schneiden 16 und 17 und andererseits die Breite 1 des bearbeiteten Fläche 18, 20 oder 22.

Es sei noch erwähnt, dass der Radius r1 der kreisbogenförmigen Vorschubbewegung der Schneiden 16 und 17 auch kleiner als der Radius r2 einer zu bearbeitenden Innenoberfläche 20 des Werkstücks 10 sein könnte.

Die Vorrichtung 1 zum spanenden Drehbearbeiten rotationssymmetrischer Flächen 18, 20 oder 22 eines Werkstücks 10, welches eingespannt ist und einen rotierenden Antrieb aufweist, hat ein Werkzeug 12 mit zwei jeweils an eine Schraubenlinienform angenäherten Schneiden 16 und 17, die in Vorschubrichtung des Werkzeugs 12 derart hintereinander angeordnet sind, dass nach der Drehbearbeitung mit der ersten Schneide 16, einer Schrupp-Schneide, die zweite Schneide 17, eine Schlicht-Schneide, in Eingriff kommt. Das Werkzeug 12 mit seinen beiden Schneiden ist dabei um eine Werkzeugrotationsachse A1 bewegbar, so dass die Schneiden 16 und 17 auf einer kreisbogenförmigen Vorschubbahn f bewegt werden, die möglicherweise hinsichtlich ihres Radius r1 etwas unterschiedlich sein können, wobei aber ein unterschiedlicher Eingriff der beiden Schneiden 16 und 17 auch durch eine Querbewegung des Werkzeugs 12 und/oder des Werkstücks 10 ausgeglichen werden könnte.

## Patentansprüche

1. Verwendung einer Vorrichtung (1) zum spanenden Drehbearbeiten rotationssymmetrischer Flächen eines Werkstücks (10) mit einem rotierenden Antrieb des gespannten Werkstücks, wobei die Rotation des Werkstücks (10) die Schnittgeschwindigkeit der Bearbeitung bewirkt, mit einem Werkzeug (12) mit einer Schneide und mit einem Vorschub des Werkzeugs, dessen Vorschubgeschwindigkeit wesentlich geringer als die Schnittgeschwindigkeit ist und durch welchen die Schneide (16) mit einer entlang der Schneide (16) wandernden Wirkstelle mit dem Werkstück (10) in Eingriff kommt, wobei das Werkzeug (12) mit der Schneide (16) um eine Werkzeugrotationsachse (A1) schwenkbar angeordnet ist und wobei die Schneide (16) am Werkzeug (12) so ausgerichtet ist, dass die Schneide (16) eine die Werkzeugrotationsachse (A1) enthaltende Axialebene schräg durchstößt, wobei das Werkzeug (12) eine zweite Schneide (17) aufweist, die zu der ersten Schneide (16) um einen Drehwinkel um die Werkzeugrotationsachse (A1) versetzt angeordnet und ausgerichtet ist und zusammen mit der ersten Schneide (16) auf einer Vorschubbahn (f) bewegbar ist, wobei die in Vorschubrichtung des Werkzeugs (12) vordere Schneide (16) eine Schrupp-Schneide (17) und die zweite Schneide eine Schlicht-Schneide ist, **dadurch gekennzeichnet, dass** die axiale Breite (b) der Schneiden (16, 17) gleich der Breite (1) der mit den Schneiden (16, 17) bearbeiteten Fläche (18, 20, 22) ist und dass der Vorschub des Werkzeugs (12) zur Ausführung einer der Schwenkbewegung des Werkzeugs (12) um die Werkzeugsrotationsachse (A1) überlagerten, vorzugsweise radial zur Werkzeugrotationsachse (A1) oder zu einer Werkstückrotationsachse (A2) ausgerichteten Ausgleichsbewegung des Werkzeugs (12) zum drallfreien Drehen eingerichtet ist.

2. Verwendung einer Vorrichtung nach Anspruch 1, **dadurch gekennzeichnet, dass** die Schneiden (16, 17) jeweils geradlinig ausgebildet sind oder dass die Schneiden (16, 17) die Form einer zur Werkzeugrotationsachse (A1) koaxialen Schraubenlinie aufweisen.

3. Verwendung einer Vorrichtung nach Anspruch 1 oder 2, **dadurch gekennzeichnet, dass** die Vorschubbahn (f) kreisbogenförmig ist und/oder dass die Schneiden (16, 17) entlang ihrer Verlaufsrichtung zueinander einen gleichbleibenden Abstand einhalten.

4. Verwendung einer Vorrichtung nach einem der Ansprüche 1 bis 3, **dadurch gekennzeichnet, dass** der Abstand der Schlicht-Schneide (17) von der Schrupp-Schneide (16) der Vorschubbewegung der Schrupp-Schneide für eine Umfangsbearbeitung des Werkstücks (10) entspricht, so dass die Schlicht-Schneide (17) bei Fortsetzung des Vorschubs des Werkzeugs (12) nach Beendigung des Schrupp-Vorganges mit dem Werkstück (10) in Eingriff ist.

5. Verwendung einer Vorrichtung nach einem der Ansprüche 1 bis 4, **dadurch gekennzeichnet, dass** die Schrupp-Schneide (16) und die Schlicht-Schneide (17) an einem gemeinsamen Halter (13) angeordnet sind.

6. Verwendung einer Vorrichtung nach einem der Ansprüche 1 bis 5, **dadurch gekennzeichnet, dass** der Halter (13) für die beiden Schneiden (16, 17) in deren Befestigungsbereich eine in Vorschubrichtung (f) orientierte Verbreiterung (14) aufweist, an welcher die wenigstens zwei Schneiden in Vorschubrichtung (f) hintereinander angeordnet sind.

7. Verwendung einer Vorrichtung nach einem der Ansprüche 1 bis 6, **dadurch gekennzeichnet, dass** wenigstens eine der Schneiden oder alle Schneiden (16, 17) insbesondere einzeln auswechselbar sind.

8. Verwendung einer Vorrichtung nach einem der Ansprüche 1 bis 7, **dadurch gekennzeichnet, dass** die Schraubenlinien der Schneiden (16, 17) eine Steigung mit einem Steigungswinkel zwischen 0° und 90°, vorzugsweise zwischen 15° und 45°, aufweisen, wobei der Steigungswinkel in Bezug auf die Vorschubrichtung positiv oder negativ ist, und/oder dass die Schneiden (16, 17) tangential zu Schraubenlinien, welche eine Steigung mit einem Steigungswinkel zwischen 0° und 90°, vorzugsweise zwischen 15° und 45°, aufweisen, ausgerichtet sind, wobei der Steigungswinkel in Bezug auf die Vorschubrichtung positiv oder negativ ist.

9. Verwendung einer Vorrichtung nach einem der Ansprüche 1 bis 8, **dadurch gekennzeichnet, dass** die Schneiden (16, 17) jeweils die Form einer Schraubenlinie aufweisen oder jeweils zu einer Schraubenlinie tangential ausgerichtet sind, wobei die Schraubenlinien in der Mantelfläche eines geraden Kreiszylinders mit konstantem Durchmesser oder in der Mantelfläche eines Konus verlaufen.

10. Verwendung einer Vorrichtung nach einem der Ansprüche 1 bis 9, **dadurch gekennzeichnet, dass** die Werkzeugrotationsachse (A1) und die Werkstückrotationsachse (A2) parallel zueinander verlaufen oder dass die Werkzeugrotationsachse (A1) unter einem Winkel von 0° bis 90° gegenüber der Werkstücksrotationsachse (A2) geneigt ist.

11. Verwendung einer Vorrichtung nach einem der Ansprüche 1 bis 10, **dadurch gekennzeichnet, dass** der Radius (r₁) der kreisbogenförmigen Vorschub- oder Schwenkbewegung der Schneiden (16, 17) kleiner als der Radius (r₂) einer zu bearbeitenden Innenoberfläche (20) des Werkstücks (10) ist.

12. Verwendung einer Vorrichtung nach einem der Ansprüche 1 bis 11, **dadurch gekennzeichnet, dass** das Werkzeug (12) gekühlt, insbesondere luftgekühlt, ist und/oder dass das Werkzeug (12) einen innenliegenden Kühlkanal, insbesondere einen ventillos zu den Schneiden (16, 17) verzweigten und diese versorgenden Kühlkanal, aufweist.

## Claims

1. Use of a device (1) for the machining by turning of rotationally symmetrical surfaces of a workpiece (10), with a rotating drive of the chucked workpiece, the rotation of the workpiece (10) giving rise to the machining cutting speed, with a tool (12) having a cutting edge and with a feed of the tool, the feed speed of which is substantially lower than the cutting speed and by which the cutting edge (16) comes into engagement with the workpiece (10) at an active location travelling along the cutting edge (16), the tool (12) with the cutting edge (16) being arranged pivotably about a tool rotation axis (A1), and the cutting edge (16) being oriented on the tool (12) such that the cutting edge (16) obliquely pierces an axial plane containing the tool rotation axis (A1), the tool (12) having a second cutting edge (17) which is arranged and oriented so as to be offset to the first cutting edge (16) by the amount of a rotary angle about the tool rotation axis (A1) and can be moved together with the first cutting edge (16) along a feed path (f), the front cutting edge (16), as seen in the feed direction of the tool (12), being a roughing cutting edge and the second cutting (17) edge a smoothing cutting edge, **characterized in that** the axial width (b) of the cutting edges (16, 17) is equal to the width (1) of the surface (18, 20, 22) machined by the cutting edges (16, 17), and **in that** the feed of the tool (12) is set up for executing a compensating movement of the tool (12), superposed on the pivoting movement of the tool (12) about the tool rotation axis (A1) and oriented preferably radially to the tool rotation axis (A1) or to a workpiece rotation axis (A2), for the purpose of twist-free turning.

2. Use of a device according to Claim 1, **characterized in that** the cutting edges (16, 17) are designed in each case to be rectilinear, or **in that** the cutting edges (16, 17) have the shape of a helical line coaxial to the tool rotation axis (A1).

3. Use of a device according to Claim 1 or 2, **characterized in that** the feed path (f) is in the form of an arc of a circle and/or **in that** the cutting edges (16, 17) maintain a constant distance from one another along their direction of run.

4. Use of a device according to one of Claims 1 to 3, **characterized in that** the distance between the smoothing cutting edge (17) and the roughing cutting edge (16) corresponds to the feed movement of the roughing cutting edge for circumferential machining of the workpiece (10), so that, when the feed of the tool (12) is continued after the end of the roughing operation, the smoothing cutting edge (17) is in engagement with the workpiece (10).

5. Use of a device according to one of Claims 1 to 4, **characterized in that** the roughing cutting edge (16) and the smoothing cutting edge (17) are arranged on a common holder (13).

6. Use of a device according to one of Claims 1 to 5, **characterized in that** the holder (13) for the two cutting edges (16, 17) has, in their fastening region, a widening (14) which is oriented in the feed direction (f) and on which the at least two cutting edges are arranged one behind the other in the feed direction (f).

7. Use of a device according to one of Claims 1 to 6, **characterized in that** at least one of the cutting edges or all the cutting edges (16, 17) are, in particular, exchangeable individually.

8. Use of a device according to one of Claims 1 to 7, **characterized in that** the helical lines of the cutting edges (16, 17) have a pitch with a pitch angle of between 0° and 90°, preferably of between 15° and 45°, the pitch angle being positive or negative with respect to the feed direction, and/or **in that** the cutting edges (16, 17) are oriented tangentially to helical lines which have a pitch with a pitch angle of between 0° and 90°, preferably of between 15° and 45°, the pitch angle being positive or negative with respect to the feed direction.

9. Use of a device according to one of Claims 1 to 8, **characterized in that** the cutting edges (16, 17) have in each case the shape of a helical line or are oriented in each case tangentially to a helical line, the helical lines running in the surface area of a straight circular cylinder of constant diameter or in the surface area of a cone.

10. Use of a device according to one of Claims 1 to 9, **characterized in that** the tool rotation axis (A1) and the workpiece rotation axis (A2) run parallel to one another, or **in that** the tool rotation axis (A1) is inclined at an angle of 0° to 90° with respect to the workpiece rotation axis (A2).

11. Use of a device according to one of Claims 1 to 10, **characterized in that** the radius (r₁) of the feed or pivoting movement, in the form of an arc of a circle, of the cutting edges (16, 17) is smaller than the radius (r₂) of an inner surface (20) to be machined of the workpiece (10).

12. Use of a device according to one of Claims 1 to 11, **characterized in that** the tool (12) is cooled, in particular air-cooled, and/or **in that** the tool (12) has an internal cooling duct, in particular a cooling duct branched to the cutting edges (16, 17) in a valve-free manner and supplying these.

## Revendications

1. Utilisation d'un dispositif (1) dévolu au tournage, avec enlèvement de copeaux, de surfaces à symétrie de révolution d'une pièce (10) à usiner, comprenant un entraînement rotatif de la pièce abloquée, la rotation de ladite pièce (10) engendrant la vitesse de coupe de l'usinage ; un outil (12) pourvu d'un tranchant ; et un système d'avance dudit outil, dont la vitesse d'avance est substantiellement inférieure à la vitesse de coupe, et par l'intermédiaire duquel le tranchant (16) vient en prise avec la pièce (10) par une zone opérante migrant le long dudit tranchant (16), ledit outil (12) étant monté à pivotement autour d'un axe (A1) de rotation dudit outil, avec ledit tranchant (16), et le tranchant (16) étant orienté, sur ledit outil (12), de façon telle que ledit tranchant (16) transite obliquement par un plan axial contenant ledit axe (A1) de rotation dudit outil, l'outil (12) comportant un second tranchant (17) qui est disposé et orienté, par rapport au premier tranchant (16), avec décalage d'un angle de rotation autour de l'axe (A1) de rotation de l'outil, et est mobile sur une trajectoire d'avance (f) conjointement audit premier tranchant (16), sachant que le tranchant (16), situé à l'avant dans la direction d'avance de l'outil (12), est un tranchant de dégrossissage, et que le second tranchant (17) est un tranchant de finition, **caractérisée par le fait que** la largeur axiale (b) des tranchants (16, 17) est égale à la largeur (1) de la surface (18, 20, 22) usinée à l'aide desdits tranchants (16, 17) ; et **par le fait que** le système d'avance de l'outil (12) est agencé en ciblant l'exécution d'un mouvement de compensation dudit outil (12), qui se superpose au mouvement pivotant de l'outil (12) autour de l'axe (A1) de rotation dudit outil et est orienté, de préférence, radialement par rapport audit axe (A1) de rotation de l'outil ou par rapport à un axe (A2) de rotation de la pièce, en vue du tournage exempt de torsion.

2. Utilisation d'un dispositif, selon la revendication 1, **caractérisée par le fait que** les tranchants (16, 17) présentent, respectivement, une réalisation rectiligne ; ou **par le fait que** lesdits tranchants (16, 17) revêtent la forme d'une ligne hélicoïdale coaxiale à l'axe (A1) de rotation de l'outil.

3. Utilisation d'un dispositif, selon la revendication 1 ou 2, **caractérisée par le fait que** la trajectoire d'avance (f) revêt la forme d'un arc de cercle ; et/ou **par le fait que** les tranchants (16, 17) conservent, l'un par rapport à l'autre, un espacement constant le long de la direction de leur étendue.

4. Utilisation d'un dispositif, selon l'une des revendications 1 à 3, **caractérisée par le fait que** l'espacement du tranchant de finition (17), vis-à-vis du tranchant de dégrossissage (16), correspond au mouvement d'avance dudit tranchant de dégrossissage ciblant un usinage de la périphérie de la pièce (10), de telle sorte que ledit tranchant de finition (17) vienne en prise avec ladite pièce (10), lors d'une poursuite de l'avance de l'outil (12), une fois l'opération de dégrossissage achevée.

5. Utilisation d'un dispositif, selon l'une des revendications 1 à 4, **caractérisée par le fait que** le tranchant de dégrossissage (16) et le tranchant de finition (17) sont disposés sur un support commun (13).

6. Utilisation d'un dispositif, selon l'une des revendications 1 à 5, **caractérisée par le fait que** le support (13) affecté aux deux tranchants (16, 17) présente, dans la région de fixation de ces derniers, une zone élargie (14) qui est orientée dans la direction d'avance (f) et sur laquelle lesdits tranchants, au nombre minimal de deux, sont placés en succession dans ladite direction d'avance (f).

7. Utilisation d'un dispositif, selon l'une des revendications 1 à 6, **caractérisée par le fait qu'**au moins l'un des tranchants, ou tous les tranchants (16, 17), peu(ven)t être notamment remplacé(s) en mode individuel.

8. Utilisation d'un dispositif, selon l'une des revendications 1 à 7, **caractérisée par le fait que** les lignes hélicoïdales des tranchants (16, 17) décrivent une pente présentant un angle d'inclinaison compris entre 0° et 90°, de préférence entre 15° et 45°, ledit angle d'inclinaison étant positif ou négatif par rapport à la direction d'avance ; et/ou par **le fait que** lesdits tranchants (16, 17) sont orientés tangentiellement vis-à-vis de lignes hélicoïdales décrivant une pente qui présente un angle d'inclinaison compris entre 0° et 90°, de préférence entre 15° et 45°, ledit angle d'inclinaison étant positif ou négatif par rapport à la direction d'avance.

9. Utilisation d'un dispositif, selon l'une des revendications 1 à 8, **caractérisée par le fait que** les tranchants (16, 17) revêtent respectivement la forme d'une ligne hélicoïdale ou sont, respectivement, orientés tangentiellement vis-à-vis d'une ligne hélicoïdale, les lignes hélicoïdales s'étendant dans la surface de l'enveloppe d'un cylindre droit, de diamètre constant, ou dans la surface de l'enveloppe d'un cône.

10. Utilisation d'un dispositif, selon l'une des revendications 1 à 9, **caractérisée par le fait que** l'axe (A1) de rotation de l'outil et l'axe (A2) de rotation de la pièce s'étendent parallèlement l'un à l'autre ; ou **par le fait que** ledit axe (A1) de rotation de l'outil est incliné d'un angle de 0° à 90° par rapport audit axe (A2) de rotation de la pièce.

11. Utilisation d'un dispositif, selon l'une des revendications 1 à 10, **caractérisée par le fait que** le rayon (r₁) du mouvement d'avance ou de pivotement des tranchants (16, 17), s'opérant en arc de cercle, est plus petit que le rayon (r₂) d'une surface intérieure (20) devant être usinée sur la pièce (10).

12. Utilisation d'un dispositif, selon l'une des revendications 1 à 11, **caractérisée par le fait que** l'outil (12) est refroidi, notamment refroidi par air ; et/ou **par le fait que** ledit outil (12) présente un canal intérieur de refroidissement, en particulier un canal de refroidissement qui est ramifié vers les tranchants (16, 17) avec absence de vannes, et alimente lesdits tranchants.
